Europäisches Patentamt

European Patent Office

Office européen des brevets

(19)

(11) Numéro de publication: **0 059 135**
A1

(12) # DEMANDE DE BREVET EUROPEEN

(21) Numéro de dépôt: 82400212.5

(22) Date de dépôt: 05.02.82

(51) Int. Cl.³: **B 65 G 47/24, F 17 C 5/00**

(30) Priorité: 09.02.81 FR 8102521

(43) Date de publication de la demande: 01.09.82
Bulletin 82/35

(84) Etats contractants désignés: **AT BE CH DE FR GB IT LI LU NL SE**

(71) Demandeur: **ELF ANTARGAZ, 4, rue Léon Jost B.P. 582, F-75828 Paris Cedex 17 (FR)**

(72) Inventeur: Lherault, Jean, 158 Boulevard Péreire, F-75017 Paris (FR)
Inventeur: Laumond, Albert, 16 Rue D'Estienne D'Orve, F-94300 Vincennes (FR)
Inventeur: Aubry, Jean, 22 Rue Brochant Bât 1, F-75017 Paris (FR)
Inventeur: Decalion, Maurice, 28 Rue Marcel Fontaine, F-59224 Denain (FR)
Inventeur: Evin, Christian, 4 Rue Molière, F-93220 Gagny (FR)

(74) Mandataire: **Phélip, Bruno et al, c/o Cabinet Harlé & Phélip 21, rue de La Rochefoucauld, F-75009 Paris (FR)**

(54) Appareil automatique d'orientation radiale d'objets cylindriques, tels que des bouteilles de gaz ou objets similaires.

(57) L'invention est relative aux installations de conditionnement de bouteilles de gaz ou analogues. Son but est d'amener automatiquement la bouteille (1) et le nez (8) de son robinet dans une position choisie malgré les écarts dimensionnels d'une bouteille à l'autre. Elle consiste à matérialiser l'axe de l'ensemble-bouteille par combinaison de surfaces géométriques de révolution définissant d'une part l'axe (Z) du corps de bouteille et d'autre part l'axe (Y) du robinet, à matérialiser l'axe du nez de robinet par une surface géométrique de révolution, et à utiliser l'axe de bouteille et l'axe de nez ainsi matérialisés pour donner au nez (8) de robinet l'orientation radiale requise.

L'invention est utilisable pour le capsulage de bouteilles de gaz.

## Appareil automatique d'orientation radiale d'objets cylindriques, tels que des bouteilles de gaz ou objets similaires.

La présente invention concerne un appareil automatique d'orientation radiale d'objets cylindriques tels que des bouteilles de gaz, ou autres objets semblables. Ainsi, dans son application aux bouteilles de gaz, l'invention permet de placer le nez du robinet de la bouteille toujours dans la même orientation radiale en vue du conditionnement ultérieur de ce nez, par exemple en vue de son capsulage.

Pour automatiser ce processus d'orientation, il est nécessaire de faire opérer les éléments actifs de l'appareil sur des parties de référence existant sur les objets à orienter et qui soient toujours exploitables.

L'invention sera décrite ci-après d'une manière détaillée dans son application à l'orientation de bouteilles de gaz, mais il va sans dire qu'elle peut être utilisée pour orienter toutes sortes d'objets cylindriques.

Une installation de conditionnement de bouteilles de gaz doit obligatoirement opérer sur des bouteilles de toutes provenances qui présentent entre elles des écarts importants. Ces écarts sont imputables à différentes causes, dont les principales sont liées à des différences de forme et également de conditions de fabrication, comme cela va être précisé dans la suite. Il existe d'autres causes secondaires d'écarts imputables à leurs conditions sévères d'utilisation, du fait qu'elles effectuent une rotation continue entre l'usine de remplissage en gaz et les consommateurs par l'intermédiaire de concessionnaires-distributeurs.

Pour bien mettre en évidence les difficultés qu'on a dû résoudre pour effectuer la mise au point

DA.

de l'appareil d'orientation radiale selon l'invention, on va tout d'abord définir les écarts dimensionnels affectant les bouteilles de gaz et en expliquer les causes.

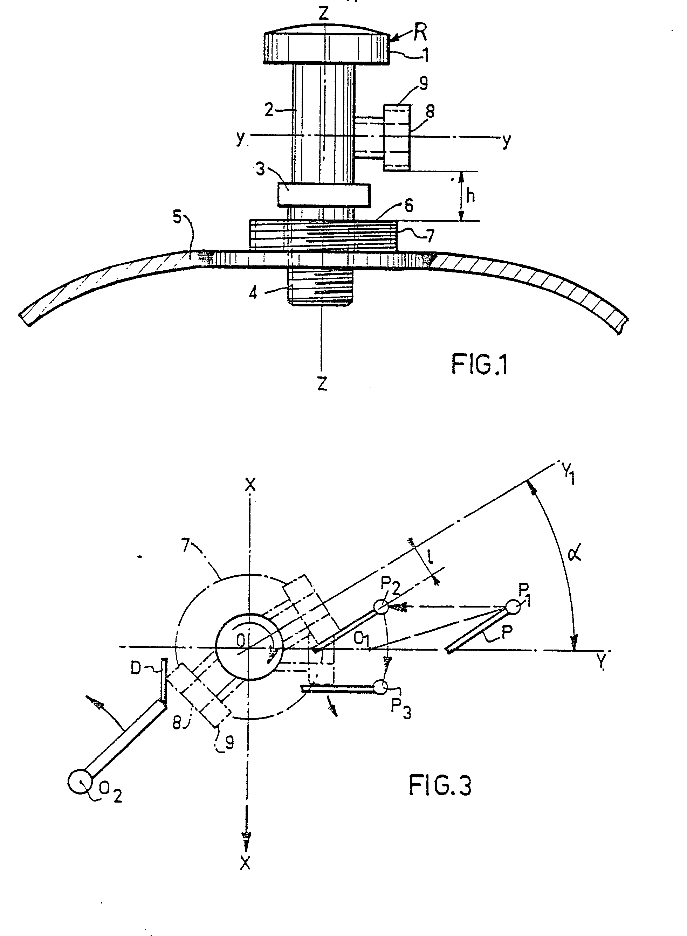

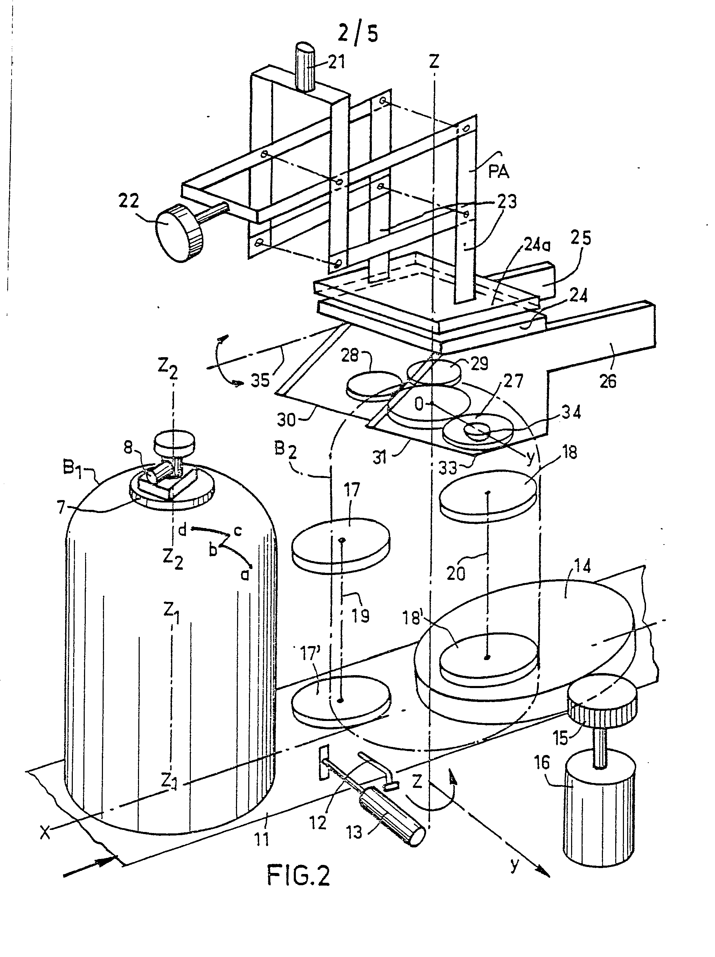

Pour mieux comprendre les problèmes posés, il faut d'abord examiner la structure d'une bouteille de gaz. En se référant à la figure 1, qui représente schématiquement la partie supérieure d'une bouteille de gaz et également à la partie gauche de la figure 2, où une bouteille est indiquée en vue en perspective, on voit que celle-ci comporte un corps cylindrique de révolution terminé supérieurement par un dôme 5 pourvu d'une ouverture dans laquelle est soudée une collerette 6;cette collerette 6 comporte deux parties filetées, à savoir un filetage intérieur destiné à recevoir l'embout fileté 4, également appelé queue ou carotte, du robinet R et un filetage extérieur 7 destiné à recevoir le chapeau de protection du robinet. Celui-ci comporte un clapet, pouvant être ouvert et fermé à l'aide d'un volant 1 et placé dans un corps 2 duquel font saillie d'une part une tubulure ou nez 8, portant un filetage extérieur 9 destiné au raccordement avec le détendeur de l'utilisateur, et d'autre part un carré 3 qui précède l'embout fileté 4. Il est d'ailleurs à noter que l'embout du robinet est pourvu d'un filetage conique mâle/type Briggs permettant d'établir une bonne étanchéité avec le filetage femelle Briggs de la collerette de bouteille.

Les écarts dimensionnels affectent le corps de bouteille, le robinet et l'ensemble formé par l'assemblage de ces deux éléments, c'est-à-dire la bouteille proprement dite. Une énumération, d'ailleurs non limitative, desdits écarts est maintenant indiquée.

En ce qui concerne le corps de bouteille:

-le diamètre extérieur de cylindre a une valeur constante à 1 mm près,mais qui est de 30 cm pour les bouteilles de butane et 31,5 cm pour les bouteilles de propane;

-le diamètre de collerette est de 66 mm pour les bouteilles de certaines marques ou Sociétés et de 68 mm pour d'autres Sociétés;

-la hauteur entre la collerette et la base du pied de bouteille est en moyenne de 50 cm, mais on peut enregistrer des différences de 7 cm;

-la hauteur de collerette varie de 15 à 22 mm;

-cette collerette,soudée par un rebord circulaire dans une ouverture ménagée dans le dôme du corps de bouteille,peut présenter un excentrement qui atteint jusqu'à ± 15 mm pour certaines bouteilles de fabrication ancienne.

En ce qui concerne le robinet:

-la seule cote constante,aux tolérances de fabrication près,est la distance entre l'axe vertical et le plan vertical tangent au filetage du nez;

-le côté du carré varie de 25 à 27 mm selon les fabricants;

-comme autres cotes non constantes,on peut également citer la hauteur du carré,la position du nez par rapport au carré,la distance entre l'axe du robinet et la face frontale du nez,les dimensions du corps du robinet ....

En ce qui concerne l'ensemble-bouteille:

-le robinet peut être vissé plus ou moins profondément dans le filetage de collerette,ce qui a une influence sur la cote d'espacement entre la face supérieure de collerette et le plan horizontal tangent au nez de robinet,cette cote pouvant varier de 4 à 21 mm;

4     0059135

-l'orientation géométrique correcte du robinet par rapport au corps de bouteille peut être également modifiée sous l'effet de chocs en cours de manipulation;

-le pied de bouteille,constitué par une virole soudée sur le corps,peut subir de fortes déformations en cours de manipulation de la bouteille.

Cette énumération des écarts dimensionnels affectant les bouteilles de gaz met en évidence les difficultés de conception d'un appareil d'orientation radiale de nez de robinet,qui puisse accepter de façon universelle n'importe quelle bouteille,tout en étant suffisamment précis et rapide.

Dans l'art antérieur,il existe des dispositifs d'orientation de nez de robinets de bouteilles de gaz sous pression.Ainsi,d'après le brevet belge BE 687.264 (HEURTEY),on connaît un procédé et une installation de remplissage de bouteilles de gaz où intervient un dispositif d'orientation du nez de robinet toujours dans la même direction. Ce dispositif saisit la bouteille par son corps cylindrique pour la faire tourner autour de son axe vertical et des palpeurs,opérant par contact ponctuel sur le nez de robinet,commandant le moteur du dispositif afin d'arrêter le mouvement de rotation de la bouteille et du nez toujours dans la même direction définie par les palpeurs. Un tel système présente deux inconvénients essentiels:

-d'une part,du fait qu'il opère sur le corps de bouteille et par conséquent seulement sur l'axe de ce corps,il ne tient pas compte de l'axe réel de l'ensemble corps-robinet,et par conséquent des causes d'erreurs définies ci-dessus;

-d'autre part,du fait du palpage ponctuel, d'ailleurs en un point géométriquement non défini, du nez de robinet,il en résulte une autre source d'erreurs affectant considérablement la précision

5

d'orientation puisque, comme indiqué ci-dessus, il n'existe qu'une seule cote constante qui est la distance entre l'axe vertical du robinet et le plan vertical tangent au nez de robinet. Ainsi par exemple les longueurs des nez de robinets varient considérablement d'un fabricant ou modèle à l'autre.

En conséquence le procédé et l'installation faisant l'objet du brevet belge BE 687 264 ne prennent pas en considération les différentes causes d'erreurs existant dans l'ensemble corps-robinet d'une bouteille et sont donc affectés par des imprécisions importantes.

Il faut également citer le brevet français FR 2.147.351 (PRIMAGAZ), qui concerne une machine de vissage/dévissage de bouchons de sécurité de bouteilles de gaz, qui comporte un dispositif d'orientation de robinet. Dans cette machine, on opère en faisant tourner le dispositif de vissage/dévissage par rapport à la bouteille, qui arrive préorientée grossièrement sur un transporteur et qui est bloquée en position par un mécanisme à butoir et poussoir venant serrer le corps de bouteille. En conséquence, on ne tient pas compte de l'axe réel de l'ensemble corps-robinet. D'autre part, le mécanisme orienteur du dispositif de vissage/dévissage opère par palpage ponctuel du nez de robinet, le point de palpage n'étant également pas défini géométriquement. On se heurte par conséquent aux mêmes difficultés et causes d'erreurs qu'avec le système HEURTEY.

La présente invention a pour but de remédier aux inconvénients et déficiences des réalisations connues.

Selon sa caractéristique essentielle, l'invention a consisté à matérialiser l'axe réel de l'ensemble-bouteille par combinaison de surfaces géométriques de révolution définissant d'une part l'axe du corps de bouteille et d'autre part l'axe du robinet, à matérialiser l'axe du nez de robinet par une surface géométrique de révolution,et à utiliser l'axe de bouteille et l'axe de nez ainsi matérialisés pour donner au nez de robinet l'orientation radiale requise.

Cette matérialisation des axes a été réalisée à l'aide des surfaces de révolution suivantes:

- pour l'axe de corps de bouteille (désigné par $Z_1$-$Z_1$ sur la figure 2),la surface cylindrique extérieure de ce corps, qui a un diamètre constant comme indiqué ci-dessus et dont l'état instantané dans l'usine de conditionnement doit être correct sinon la bouteille serait rebutée,

- pour l'axe du robinet (désigné par $Z_2$-$Z_2$ sur la figure 2),la surface circonscrite au filetage extérieur de la collerette (ce filetage étant désigné par 7 sur la figure 1);en effet,l'axe du robinet coïncide après vissage,avec l'axe du filetage intérieur de la collerette,qui coïncide lui-même,aux tolérances d'usinage près,avec l'axe dudit filetage extérieur cylindrique de la collerette,

- pour l'axe du nez de robinet (désigné par y-y sur la figure 1),la surface circonscrite au filetage extérieur dudit nez (désigné par 9 sur la figure 1).

A la différence des réalisations connues où des opérations d'orientation angulaire sont effectuées en faisant intervenir des contacts ponctuels,l'invention est basée,grâce à cette matérialisation d'axes par des surfaces de révolution,sur des contacts linéaires suivant des droites qui sont les génératrices desdites surfaces de référence.

L'invention a donc pour objet un appareil automatique d'orientation radiale de bouteilles de gaz, ou d'autres objets cylindriques se déplaçant en translation dans un plan perpendiculaire à leur axe,ledit appareil comprenant:

-un dispositif de centrage axial de bouteille opérant d'une part sur des génératrices de la surface cylindrique du corps de bouteille, définissant l'axe $(Z_1-Z_1)$ dudit corps, et d'autre part sur des génératrices de la surface circonscrite au filetage extérieur de collerette, définissant l'axe $(Z_2-Z_2)$ du robinet, pour centrer l'axe résultant de la bouteille dans l'appareil, et

-un dispositif pour amener ensuite le nez de robinet dans l'orientation radiale requise en prenant comme référence ledit axe résultant centré $(Z-Z)$ de ladite bouteille et en opérant sur une génératrice de la surface circonscrite au filetage extérieur du nez de robinet, définissant l'axe $(y-y)$ dudit nez.

Selon d'autres particularités de la présente invention;

-ladite génératrice de la surface circonscrite au filetage extérieur du nez de robinet est la génératrice située dans le plan diamétral horizontal dudit nez;

-ledit dispositif de centrage axial de bouteille comprend:

-pour centrer l'axe $(Z_1-Z_1)$ du corps de bouteille en opérant sur ses génératrices et pour assurer son entraînement en rotation autour de cet axe, un mécanisme constitué par un étau, dont le plan médiateur est orienté perpendiculairement à la direction d'avancement des bouteilles et qui comprend une première mâchoire portant une roue motrice horizontale centrée dans ledit plan médiateur et une seconde mâchoire portant quatre galets fous sensiblement horizontaux et qui sont répartis de manière à être d'une part alignés verticalement deux par deux et d'autre part à être placés deux par deux dans deux plans horizontaux situés de part et d'autre et à égale distance du plan horizontal d'action de la roue motrice, les deux mâchoires étant actionnées par un vérin de manière à appliquer la roue motrice et les galets contre trois génératrices du corps de bouteille et pour centrer l'axe $(Z_2-Z_2)$ du robinet en opérant sur la surface circonscrite au filetage extérieur de la collerette, un mécanisme comprenant un flasque fixe portant un galet orienté horizontalement, monté fou et dont l'axe est situé, dans la position de centrage, dans ledit plan médiateur de l'étau de centrage du corps de bouteille, et un flasque mobile pouvant pivoter autour d'un axe horizontal et portant deux galets orientés perpendiculairement au flasque, montés fous et disposés symétriquement par rapport audit plan médiateur de façon que, lors du mouvement de rapprochement de ce flasque mobile, les deux galets précités viennent serrer la collerette de bouteille contre le galet fixe en assurant ainsi son centrage axial à l'aide de trois génératrices de ladite surface circonscrite;

-la roue motrice, destinée à entrer en contact avec la surface du corps de bouteille pour assurer son centrage axial et son entraînement, comporte une surface périphérique de grand coefficient de frottement, formée notamment par un pneumatique, et est entraînée en rotation à l'aide d'un groupe moteur-frein par l'intermédiaire d'une poulie ou d'un autre organe approprié;

-il est prévu un dispositif de support et guidage vertical sur lequel sont montés ledit mécanisme de centrage de collerette de bouteille et ledit dispositif orienteur de nez de robinet et qui est pourvu de moyens pour régler en hauteur ledit dispositif de support en vue d'adapter le niveau du mécanisme de centrage de collerette au niveau de cette dernière;

-ledit dispositif de support et guidage vertical a une structure de pantographe;

-lesdits moyens de réglage de hauteur dudit dispositif de support et guidage vertical comprennent:

-deux bords biseautés formés sur lesdits flasques du mécanisme de centrage de collerette de bouteille de manière à entrer en contact avec le corps de la bouteille pénétrant dans l'appareil,et en outre

-une partie d'appui en forme de bille qui est placée au centre du galet solidaire du flasque fixe de manière à poursuivre l'action de réglage de hauteur dudit dispositif de support jusqu'en un point zénithal de la bouteille de gaz;

-le dispositif d'orientation radiale du nez de robinet comprend:

-un mécanisme de palpage de nez,comportant un organe de palpage pouvant être amené par translation dans une position où il entre en contact avec une génératrice de ladite surface circonscrite au filetage extérieur de nez et est ensuite déplacé par pivotement autour de l'axe de la bouteille,en actionnant alors un moyen de commande de freinage et d'arrêt de l'étau de centrage de corps de bouteille pour immobiliser le nez dans l'orientation radiale requise , et

-un détecteur de présence de nez placé sur le trajet circulaire du nez et qui,lorsqu'il entre en contact avec celui-ci,déclenche le mécanisme de translation de l'organe de palpage pour l'amener dans la position où son pivot est centré sur ledit axe résultant (Z-Z)de la bouteille;

-ledit organe de palpage est constitué par une palette,de forme sensiblement rectangulaire et dont le côté long est orienté sensiblement horizontalement,ladite palette étant fixée sur un levier coudé pouvant pivoter autour d'un pivot solidaire d'un chariot, lui-même déplaçable sur des glissières sous l'impulsion d'un vérin ou autre organe semblable, de façon à amener ledit pivot en coïncidence avec ledit axe résultant (Z-Z) de bouteille;

-l'angle de pivotement de l'organe de palpage autour de son pivot jusqu'à immobilisation de la bouteille est réglé en tenant compte de l'inertie des éléments de commande, de transmission et du frein, ainsi que de la bouteille, pleine ou vide;

-ledit moyen de commande d'immobilisation de la bouteille dans l'orientation requise est constitué par une came montée sur le pivot du levier supportant ledit organe de palpage et sollicitant un organe de commande, notamment un distributeur pneumatique, du frein du groupe d'actionnement de la roue motrice dudit étau de centrage de corps de bouteille;

-dans le mécanisme d'orientation radiale du nez de robinet, le détecteur de présence de nez est placé, en considérant le sens de rotation de la bouteille autour de son axe résultant, en amont dudit organe de palpage, en étant espacé de celui-ci d'un intervalle angulaire au moins égal à 180°;

-il est prévu, en dessous et dans l'axe de l'étau de centrage de corps de bouteille, un vérin dont la ligne d'action est verticale et qui est muni à sa partie supérieure de trois organes d'appui ponctuel en forme de boules qui viennent s'appliquer contre le fond de la bouteille au cours de l'opération de centrage et d'orientation radiale du nez;

-il est prévu, à la suite du poste orienteur, un étau de blocage, centré sur l'axe du transporteur et assurant la retenue de la bouteille, dont le nez a été correctement orienté, en attente de son transfert.

D'autres avantages et caractéristiques de l'invention seront mis en évidence dans la suite de la description,donnée à titre d'exemple non limitatif, en référence aux dessins annexés dans lesquels:

Fig.1 est une vue en élévation et en coupe partielle de la partie supérieure d'une bouteille de gaz,montrant le robinet vissé dans la collerette de la bouteille;

Fig.2 est une vue en perspective de la ligne transporteuse,montrant l'étau d'alignement et d'entraînement en rotation de bouteille ainsi que le dispositif de centrage de collerette,avec le dispositif de support et guidage vertical du type pantographe;

Fig.3 est une vue en plan schématique de la ligne transporteuse,montrant les éléments essentiels qui assurent l'orientation du nez de robinet dans la direction requise;

Fig.4 est une vue en élévation longitudinale de la ligne transporteuse montrant les différents postes de l'appareil d'orientation;

Fig.5 est une vue latérale détaillée du flasque mobile du dispositif de centrage de collerette;

Fig.6 est une vue latérale détaillée du flasque fixe de ce dispositif de centrage de collerette;

Fig.7 est une vue en élévation,faite dans un plan perpendiculaire à la ligne transporteuse,d'un mode de réalisation du dispositif orienteur selon l'invention,et

Fig.8 est une vue en plan schématique du dispositif orienteur de la figure 7,permettant d'expliquer son fonctionnement.

Dans la description qui va suivre,on se référera à un appareil servant à l'orientation de bouteilles de gaz. Sous une forme avantageuse,un tel appareil peut être intégré dans une ligne de conditionnement de telles bouteilles,comportant également les dispositifs faisant l'objet de la demande de brevet déposée ce même jour au nom de la Demanderesse pour une "Machine de capsulage de bouteilles de gaz ou de récipients semblables".

Comme indiqué sur la figure 1,une bouteille de gaz comporte un robinet R vissé par son embout 4 dans une collerette 6,elle-même fixée par soudage sur le corps 5 de la bouteille B.

Le problème consiste à orienter le nez 8 de la bouteille,entraînée sur une ligne transporteuse, toujours dans la même direction radiale par rapport à l'axe $(X-X)$ de la ligne. Pour le résoudre,on a mis au point,conformément à la présente invention,un appareil opérant sur les surfaces de référence suivantes:

-surface cylindrique du corps de bouteille pour effectuer un centrage de son axe $(Z_1-Z_1)$ dans le plan médiateur du poste d'orientation,

-surface cylindrique circonscrite au filetage extérieur 7 de collerette 6 pour définir la position de l'axe $(Z_2-Z_2)$ du robinet de bouteille,et

-surface cylindrique circonscrite au filetage extérieur 9 du nez 8 de robinet pour définir l'orientation angulaire de l'axe $(y-y)$ du nez dans un plan horizontal perpendiculaire à l'axe $(Z-Z)$.

L'appareil comprend les ensembles suivants:

-un châssis

-un dispositif pour centrer axialement le corps de bouteille et assurer son entraînement en rotation,

-un dispositif de support et guidage vertical,par exemple du genre pantographe,relié au châssis et sur lequel sont montés:

-un dispositif de réglage de hauteur du dispositif de support par rapport à la bouteille arrivante,

-un mécanisme de centrage de la collerette de bouteille,

-un dispositif de palpage de nez de robinet définissant l'orientation requise et commandant l'arrêt de la bouteille dans cette position angulaire.

Pour bien mettre en évidence les caractéristiques de l'appareil d'orientation selon l'invention, on va maintenant décrire en détail sa structure et ses fonctions.

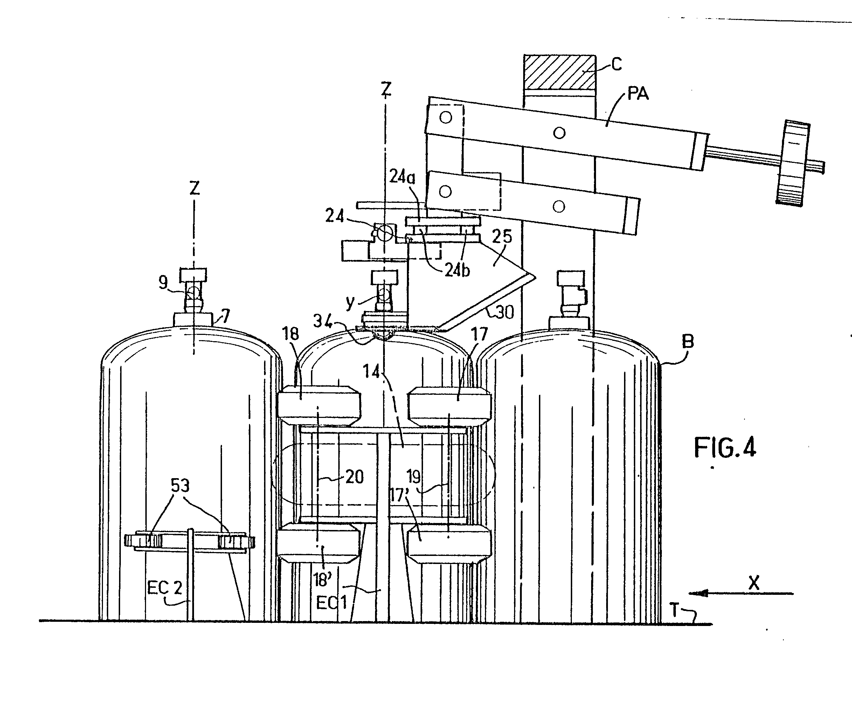

Le châssis, qui a une forme de portique, a été seulement indiqué schématiquement en C sur les figures (figure 4). Il est disposé de manière à chevaucher le transporteur de bouteilles, désigné par 11 sur la figure 2, qui est constitué par exemple par deux chaînes parallèles à maillons plats assurant l'entraînement des bouteilles tout en permettant un glissement relatif.

Les bouteilles, dont l'une est indiquée en $B_1$, sur la figure 2, arrivent une par une dans l'appareil d'orientation. La bouteille entrante sollicite un témoin de présence 12 placé sur le côté du transporteur et qui remplit plusieurs fonctions:

-actionnement, à l'aide d'un vérin 13, d'un butoir de retenue de bouteilles suivantes, qui vient se placer transversalement à la ligne transporteuse,

-actionnement du dispositif de centrage de corps de bouteille.

La figure 2 représente un mode de réalisation de ce dispositif de centrage; cependant cet agencement n'est pas limitatif de l'invention, le seul impératif étant que les trois fonctions suivantes soient remplies par cet ensemble:

-immobilisation de l'axe de la bouteille dans une position toujours constante par rapport au dispositif de support et guidage vertical,cette position étant définie par le plan médiateur du dispositif de centrage,orienté perpendiculairement à l'axe du transporteur,

-mise en rotation de la bouteille autour de son axe,

-ensuite,arrêt de rotation de la bouteille dans l'orientation requise sous la commande du dispositif de palpage de nez de robinet.

Dans le mode de réalisation représenté,le dispositif de centrage de corps de bouteille comporte d'un côté une roue 14 et de l'autre côté quatre galets 17, 17', 18, 18'.

La roue 14,pourvue d'un pneumatique ou d'un autre bandage souple périphérique,est entraînée par l'intermédiaire d'une poulie 15,à surface périphérique striée ou crantée pour améliorer son coefficient de frottement,à l'aide d'un groupe moteur-frein 16. Cette roue motrice est orientée horizontalement et son axe de rotation est situé dans le plan médiateur du dispositif de centrage de corps de bouteille,qui est aussi le plan médiateur du poste d'orientation.

Les quatre galets 17, 17', 18,18' , également orientés horizontalement,sont répartis en deux paires 17,17' et 18,18',dont le plan médiateur coïncide avec celui du dispositif de centrage de corps de bouteille.Les galets des paires respectives sont montés fous sur les axes 19,20 les supportant.

On crée ainsi un étau,dont une mâchoire est constituée par la roue motrice 14 et l'autre mâchoire par les quatre galets 17, 17', 18,18' et qui assure,sous l'action d'un vérin non représenté,le centrage de l'axe $(Z_1-Z_1)$ du corps de bouteille dans le plan médiateur précité. Il va de soi qu'au stade de la conception,on tient compte du diamètre et de la hauteur de la partie cylindrique de bouteille pour définir la disposition
géométrique des différents éléments dudit étau de
centrage.

Une fois la bouteille saisie dans cet étau,elle
est mise en rotation par la roue 14 actionnée par la
poulie 15 et le groupe moteur 16.Ce mouvement de rotation sera ensuite arrêté après achèvement des opérations de centrage de collerette et d'orientation
de nez de robinet,l'arrêt étant provoqué par serrage
du frein incorporé au groupe 16.

Pour améliorer l'efficacité de l'étau de centrage
de corps de bouteille et par conséquent de l'ensemble
de l'appareil orienteur,on a cherché à uniformiser
autant qu'il est possible les conditions de manipulation, d'entraînement en rotation et d'immobilisation
de la bouteille dans le poste de centrage en soutenant
les bouteilles par leur base dans l'étau de centrage
de corps,de façon à contrebalancer deux influences
perturbatrices:

-les écarts entre les poids des bouteilles,qui
peuvent varier de 22,5 à 28 kg,

-les déformations possibles des pieds des bouteilles en cours de manipulation.

On a résolu ce problème en disposant à la partie
inférieure de l'étau de centrage de corps un dispositif de soulèvement de bouteille,non représenté
sur les figures. Ce dispositif comprend un mécanisme
d'actionnement dont la ligne d'action est verticale
et qui est muni à sa partie supérieure d'un ou
plusieurs organes d'appui,opérant par contact ponctuel ou linéaire contre le fond de la bouteille.

Ainsi dans un exemple de réalisation,le dispositif comprend un vérin, centré sur l'axe de l'étau et pourvu à sa partie supérieure d'un support pivotant à trois branches terminées par trois organes d'appui en forme de boules. Le vérin est actionné en synchronisme avec l'étau centreur de manière à faire pivoter le support qui s'applique par ses trois boules contre le fond de la bouteille et qui la soulève en l'écartant des chaînes transporteuses. Ainsi,au lieu que la bouteille reste en contact frottant avec les chaînes, elle est soutenue par les boules librement tournantes avec lesquelles elle est seulement en contact pontuel,ce qui se traduit d'une part par une uniformisation de l'inertie des bouteilles, très importante lors de l'opération d'orientation de nez comme cela sera précisé dans la suite,et d'autre part par l'élimination de l'influence des défauts du pied sur l'orientation générale de la bouteille.

Le rôle de l'étau de centrage de corps de bouteille ayant été défini,il faut maintenant examiner ce qui se passe à la partie supérieure de la bouteille. En considérant la figure 2,on voit qu'il est prévu un dispositif de support et guidage vertical du type pantographe,désigné par PA. Ce support possède un plan médiateur qui est aligné avec le plan médiateur de la ligne transporteuse. Le support à pantographe PA est maintenu dans le portique de l'appareil par l'intermédiaire d'un embout 21.En outre ce support à pantographe PA est équipé d'un contrepoids d'équilibrage 22 et il est relié par les extrémités des deux barres verticales 23 du parallélogramme à un ensemble formé de deux plateaux 24 et 24a,espacés l'un de l'autre par plusieurs silent - blocs,dont deux sont indiqués schématiquement en 24b sur la figure 4,qui ont pour fonction de créer un certain degré de souplesse entre le pantographe et les parties qu'il supporte,c'est-à-dire le dispositif de centrage de collerette de bouteille et le mécanisme orienteur de nez de robinet,qui sont reliés au plateau inférieur 24.

On va décrire en premier lieu le dispositif de centrage de collerette. Comme indiqué ci-dessus,la surface matérialisant l'axe $(Z_2-Z_2)$ de l'ensemble robinet-collerette est la surface 7 circonscrite au filetage extérieur de la collerette 6. Pour effectuer le centrage de la collerette,on a mis au point un dispositif opérant sur trois génératrices de cette surface. Ce dispositif comporte deux flasques verticaux 25,26. Le flasque 26 est fixé sur le plateau 24 et il porte un galet 27 monté fou dans un plan perpendiculaire à l'axe $(Z_2-Z_2)$. La position de l'axe de ce galet et son diamètre sont choisis de façon que,lorsque la collerette est centrée sur ledit axe $(Z_2-Z_2)$,sa surface périphérique soit disposée tangentiellement à la surface périphérique du galet.

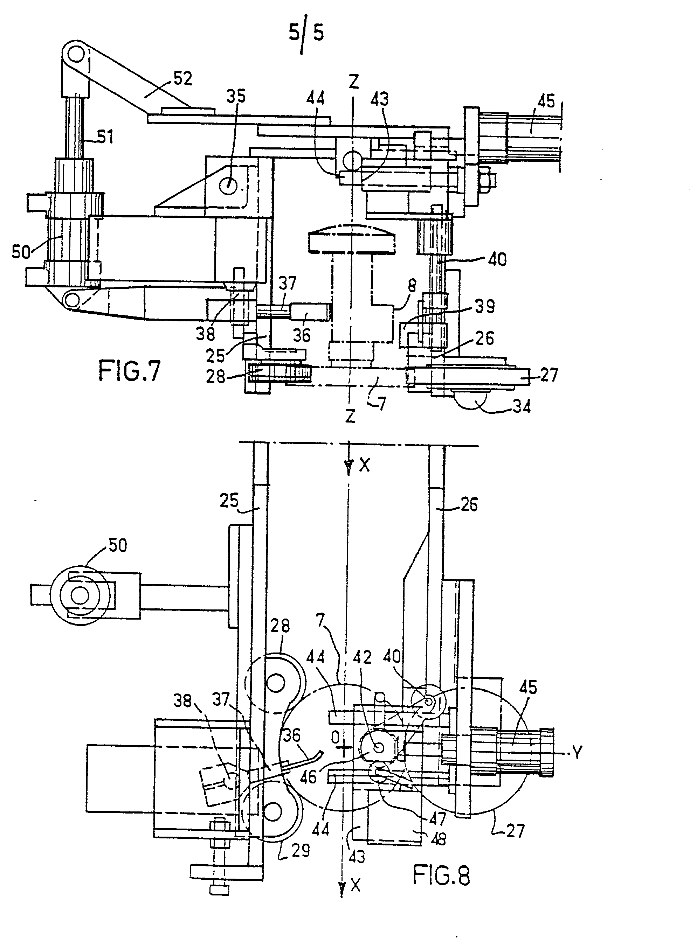

Le flasque 25 est par contre mobile par-rapport au plateau 24 par rotation autour d'un axe horizontal, indiqué en 35 sur les figures 2 et 7,sous l'impulsion d'un vérin 50, relié au flasque 25 par son cylindre et dont la tige de piston 51 est articulée sur une barre 52 fixée sur le plateau 24a. Le flasque 25 porte deux galets 28,29,qui sont disposés dans un même plan orienté perpendiculairement au flasque 25 et dont les centres sont situés sur une droite orientée parallèlement à l'axe de la ligne transporteuse . Comme pour le galet fixe ‾‾‾‾‾‾‾‾‾‾‾‾‾‾

27, la disposition des galets 28, 29 sur le flasque mobile 25 ainsi que leurs diamètres sont choisis initialement en fonction du diamètre de la collerette qu'ils ont pour fonction de centrer.

Ce dispositif de centrage de collerette fonctionne de la façon suivante. Initialement, en l'absence de bouteille dans l'étau de centrage de corps, le flasque mobile 25 portant les deux galets 28, 29 est immobilisé dans une position inclinée par rapport à la verticale par contraction du vérin 36. Lorsqu'une bouteille arrive dans l'étau de centrage, elle est pincée entre les quatre galets 17, 17', 18, 18' et la roue motrice 14; simultanément le vérin 50 est actionné dans le sens d'extension de manière à faire pivoter le flasque 25 et par conséquent appliquer les deux galets 28, 29 contre la collerette 7, qui vient s'appuyer de l'autre côté, contre le galet 27. Il en résulte un centrage correct de l'axe $Z_2$-$Z_2$ de la collerette et par conséquent du robinet.

Cependant, pour que la collerette soit correctement pincée par les trois galets 27, 28, 29, cela suppose que le plan d'action des galets et le plan moyen de la collerette ont été amenés pratiquement en coïncidence. Pour résoudre ce problème d'adaptation de hauteurs relatives, il est prévu sur le support à pantographe des moyens de réglage de sa hauteur par rapport à la bouteille arrivante. Ces moyens sont constitués d'une part par des bords biseautés 30, 31 formés sur chacun des flasques 25, 26, qui remplissent ainsi la fonction de patins, et d'autre part par un organe d'appui placé au centre du roulement fixe en correspondance au plan médiateur du dispositif de centrage de corps de bouteille. Cet organe d'appui est réalisé, dans l'exemple considéré, sous la forme d'une bille 34. Sur la fig. 2, on a mis en évidence d'une part par la courbe a-b le trajet suivi, sur le corps de la bouteille, par le point de contact du bord biseauté 31 avec celle-ci, et d'autre part par la courbe c-d la reprise de la fonction de réglage en hauteur par l'organe d'appui en forme de bille 34. Au point zénithal d, la bille 34 s'appuie au point haut du corps de bouteille et elle soutient le dispositif de centrage de collerette dans la position appropriée par rapport à la collerette. Il est à noter que les paramètres de dimensionne-

19

ment et de fixation de la bille dans le galet 27 sont établis en tenant compte des écarts dimensionnels pouvant affecter la zone de fixation de la collerette 6 sur le corps 5 de la bouteille.

En conséquence, par action combinée des dispositifs décrits ci-dessus, c'est-à-dire l'étau de centrage de corps de bouteille opérant sur l'axe $Z_1$-$Z_1$ de ce corps et le dispositif de centrage de la collerette opérant sur l'axe $Z_2$-$Z_2$ de cette collerette, l'ensemble robinet-corps constituant la bouteille est centré sur un axe résultant, désigné par Z-Z sur les figures et qui, du fait qu'il est défini par coopération spatiale des axes $Z_1$-$Z_1$ et $Z_2$-$Z_2$, tient compte de l'historique de la bouteille et des écarts dimensionnels définis ci-dessus.

Il s'agit maintenant d'effectuer l'orientation radiale du nez de robinet dans un sens déterminé, qui est matérialisé sur la fig. 3 par l'axe O-Y, qui correspond d'ailleurs au plan médiateur de l'étau de centrage de corps et du dispositif de centrage de collerette, cette orientation n'étant cependant pas limitative pour l'appareil selon l'invention.

Ce problème est résolu conformément à la présente invention de la façon mise en évidence sur le schéma de la fig. 3. Sur cette figure, on a indiqué en X-O-X la direction de travail de la ligne transporteuse de bouteille dont le nez 8 doit être orienté dans la direction O-Y en faisant intervenir la surface de référence constituée par la surface 9 circonscrite au filetage extérieur du nez 8. On a désigné par P un organe de palpage qui, dans l'exemple considéré, est agencé de la manière suivante. Cet organe de palpage est fixé sur un levier coudé comportant un pivot placé sur l'axe O-Y, ledit levier étant lui-même monté sur un chariot pouvant exécuter un mouvement de translation parallèle à l'axe O-Y, comme cela sera décrit de façon plus précise dans la suite. En $P_1$ l'organe de palpage P se trouve dans la position de repos, où il est écarté de la trajectoire circulaire décrite par un nez de bouteille se trouvant dans la position de centrage. L'organe de palpage P est incliné par rapport à l'axe O-Y d'un angle $\alpha$ qui sera défini dans la suite. A un moment bien

20¹ -

défini du cycle de travail de l'appareil d'orientation, l'-organe de palpage est transféré par translation de la position $P_1$ jusque dans la position $P_2$, où il est situé sur le trajet circulaire parcouru par le nez 8. Il est à noter que la distance de translation $P_2$-$P_1$ est réglée initialement de façon à amener le centre de pivotement $O_1$ de l'organe de palpage P en coïncidence avec le point O, c'est-à-dire sur l'axe Z-Z de la bouteille en position de centrage.

Lors de son mouvement circulaire, le nez 8 du robinet de bouteille entre en contact, par une génératrice de sa surface de référence, qui est la surface 9 circonscrite à son filetage extérieur, avec la partie plane de l'organe de palpage P qui est alors entraîné en rotation autour du point O. Au cours de ce mouvement de pivotement, l'organe de palpage agit, par l'intermédiaire de moyens de transmission qui seront décrits dans la suite, sur le groupe moteur-frein 16 de façon à provoquer le freinage de la roue motrice 14, et par conséquent de la bouteille de gaz, pour l'immobiliser finalement dans une position où le nez 8 du robinet est orienté dans la direction O-Y. L'organe de palpage P arrive alors dans la position $P_3$, qui est écartée de la position $P_2$ de l'angle $\alpha$ précité. L'angle $\alpha$ tient compte par conséquent des facteurs d'inertie et de transmission de tous les éléments permettant d'arrêter le nez dans cette position O-Y. C'est donc un paramètre de réglage initial qui est défini empiriquement lors de la mise au point de l'appareil. Si, pour une raison quelconque, le nez n'est pas immobilisé dans cette position O-Y, l'organe de palpage arrivant dans la position $P_3$ peut pivoter sur lui-même, comme indiqué par la petite flèche sur la fig. 3, grâce à un élément de sécurité qui sera précisé dans la suite.

Pour déclencher ce processus de palpage, il est en outre prévu un détecteur de nez, désigné par D sur la fig. 3, qui est placé dans la zone décrite par le nez lors de sa rotation autour de l'axe O-Z et qui peut lui-même pivoter autour d'un axe vertical désigné par $O_2$. Quand la bouteille arrive dans la position d'alignement définie par le plan médiateur de l'étau de centrage de corps et quand elle est mise en rotation, le nez 8 entre en contact, comme indiqué sur la

-21

fig. 3, avec le détecteur D qui, par pivotement autour de $O_2$, actionne un système, non représenté, assurant la commande du mouvement de translation du chariot supportant l'organe de palpage P qui est ainsi amené dans la position $P_2$, comme décrit ci-dessus. Cependant il est à noter que, pour permettre à l'étau de centrage de corps de bouteille d'assurer la mise en rotation de cette bouteille depuis la vitesse nulle jusqu'à une vitesse de régime qui soit la même pour toutes les bouteilles, compte tenu des poids différents des bouteilles et de l'inertie à vaincre, on dispose le détecteur de nez D dans une position placée au moins à 180° en amont de la position d'entrée en action de l'organe de palpage P, ce qui fait que la bouteille doit effectuer au moins un demi-tour avant d'entrer en contact par son nez avec l'organe de palpage P. A cet égard, le vérin de soulèvement de bouteille joue un rôle intéressant puisque, en écartant le fond de la bouteille du transporteur, il diminue considérablement les frottements et uniformise l'inertie.

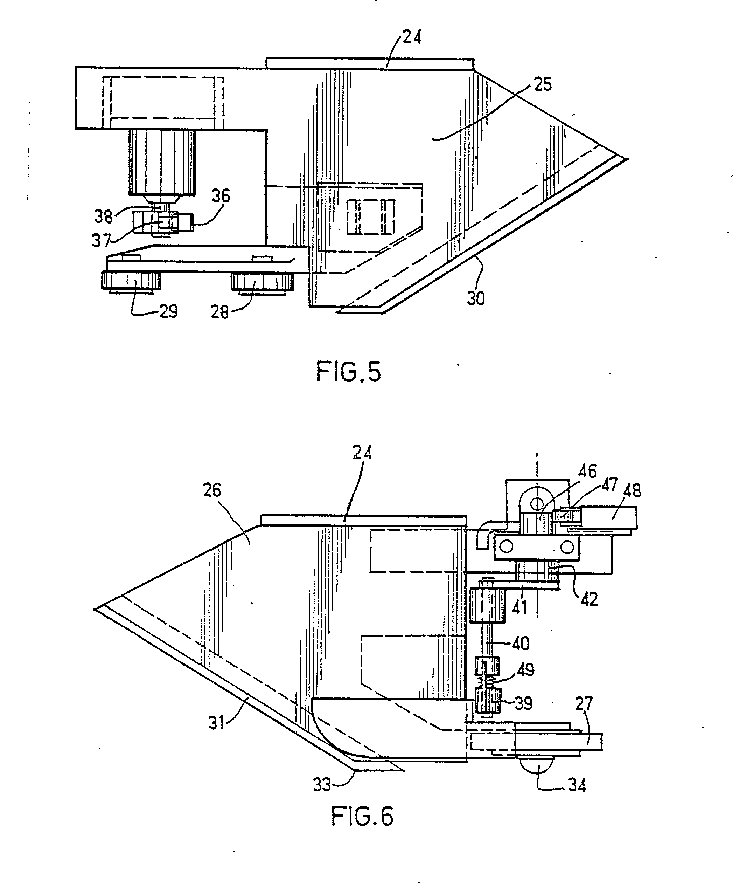

Sur les fig. 6, 7 et 8, on a représenté un mode préféré de réalisation du dispositif d'orientation de nez. L'organe de palpage est constitué par une palette rectangulaire 39 dont la plus grande dimension est orientée horizontalement et dont la surface plane est placée dans un plan vertical. Cette palette est fixée en bout d'une tige verticale 40 qui est elle-même solidaire d'un bras 41. Ce bras 41 est monté sur un pivot 42, correspondant au point $O_1$ de la fig. 3 et qui doit être amené par translation sur l'axe O-Z. Ce pivot 42 est solidaire d'un chariot 43 qui peut coulisser sur des glissières 44 sous l'impulsion d'un vérin 45. Tous ces éléments sont solidaires du flasque fixe 26.

Il est en outre prévu sur le pivot 42 une came 46 comportant un méplat qui agit, lors de la rotation du pivot 42, sur un organe d'actionnement 47 d'un distributeur 48 assurant la commande du serrage du frein du groupe 16 pour immobiliser la roue motrice 14 de l'étau de centrage de corps afin d'arrêter le nez S dans la position O-Y.

Sur les fig. 7 et 8, le détecteur D de la fig. 3 se présente sous la forme d'une plaquette 36 qui est fixée sur une tige 37 pouvant pivoter autour d'une broche 38, cor-

22

respondant à $O_2$ de la fig. 3. Cet ensemble est solidaire du flasque pivotant 25 et il est par conséquent amené dans la position de détection de nez en même temps que les deux galets 28, 29 sont placés dans la condition de centrage de collerette 7. On remarque également qu'il est placé à plus de 180° en amont de la position d'entrée en action de l'organe de palpage 39.

On a indiqué en 49 un ressort, disposé coaxialement à la tige 40 supportant la palette de palpage 39 et ayant pour fonction de permettre une rotation de cette palette autour de l'axe de la tige 40 en cas d'incident provoquant un dépassement de la position O-Y par le nez.

La bouteille et son nez de robinet sont maintenant correctement orientés. La bouteille est alors relâchée par l'étau de centrage de corps, désigné par $EC_1$ sur la fig. 4, et elle est transférée par le transporteur T dans un dispositif de blocage, également agencé en forme d'étau, désigné par $EC_2$ et comportant des mâchoires de serrage, schématisées par des galets 53, qui viennent s'appliquer contre des génératrices du corps cylindrique de la bouteille. Celle-ci est ainsi tenue à disposition pour un conditionnement ultérieur, notamment le capsulage du nez de robinet.

Pour faciliter la compréhension de l'appareil d'orientation selon l'invention, on va maintenant donner une description détaillée de son fonctionnement :

En considérant la fig. 2, la bouteille $B_1$ pénètre dans le poste d'orientation où elle commence par actionner le témoin de présence 12. Celui-ci commande le vérin 13 de façon à faire sortir le butoir qui vient se placer transversalement au transporteur 11 de façon à arrêter les bouteilles suivantes pendant la phase d'orientation de la bouteille $B_1$, qui progresse vers la position indiquée en trait mixte en $B_2$.

Au cours de cette progression, il se produit un réglage de hauteur du support à pantographe PA qui porte le dispositif de centrage de collerette 27, 28, 29 et le mécanisme orienteur, comportant le détecteur de nez 36 et la palette de palpage 39. La bouteille entre en contact, au point a, avec le bord biseauté 31 du flasque 26. Le point de contact décrit la courbe a-b et, a un certain moment qui est variable en fonction de la forme des bouteilles, la fonction d'appui du support à pantographe sur la bouteille est reprise par la bille 34, solidaire du galet 27 et qui entre en contact avec la bouteille au point c de façon à poursuivre le relevage du pantographe jusqu'au point zénithal d, qui est situé dans le plan médiateur de l'étau de centrage de corps, défini par l'axe O-Y sur les fig. 2 et 3. Un autre témoin de présence, non indiqué, a assuré l'actionnement de l'étau de centrage de corps, dont les mâchoires portant respectivement les deux paires de galets 17, 17', 18, 18', et la roue 14 sont déplacées par pivotement autour d'un axe horizontal, à l'aide d'un vérin non représenté, de façon à appliquer les quatre galets et la roue contre le corps de la bouteille qui est ainsi maintenu serré et centré. En outre, le vérin de soulèvement de bouteille est actionné pour relever la bouteille et l'écarter du transporteur.

Presque simultanément, le groupe moteur-frein 16 est enclenché de façon à faire tourner la poulie 15, et par conséquent la roue motrice 14 qui entraîne en rotation la bouteille $B_2$. En même temps le vérin 50, assurant le pivotement du flasque mobile 25 portant les deux galets 28, 29, est actionné de façon à rapprocher les deux galets 28, 29 du galet 27 solidaire du flasque fixe 26, ce qui assure le serrage et le centrage de la collerette 7 entre lesdits galets 27, 28, 29. La bouteille est ainsi centrée par son axe résultant Z-Z.

Au cours de la rotation de la bouteille autour de son axe, le nez 8 du robinet vient toucher le détecteur 36 qui déclenche, par l'intermédiaire d'un système de transmission, non représenté, le mouvement du chariot 43 sur les glissières 44 dans une direction perpendiculaire à l'axe X-X de la ligne transporteuse. Ce mouvement s'effectue, comme indiqué sur la fig. 3, sur la distance $O_1$-O, de façon à amener la palette de palpage P dans une position où les deux conditions suivantes sont remplies :

- la palette P est placée et orientée de façon à entrer en contact avec le nez de robinet le long d'une génératrice de sa surface cylindrique de référence,
- en outre, du fait qu'elle est montée sur un levier pouvant

24

pivoter maintenant autour du point O, elle est entraînée en rotation par le nez en conservant ce contact linéaire, ce qui permet d'obtenir une commande précise, à la différence des réalisations connues dans lesquelles il n'intervient qu'un contact ponctuel autour d'un centre qui n'est pas situé sur l'axe de la bouteille.

Ensuite la palette de palpage est déplacée par le nez depuis l'orientation $OY_1$ jusque dans l'orientation O-Y, c'est-à-dire de l'angle $\alpha$ défini ci-dessus, en actionnant dans cet intervalle angulaire les éléments de commande d'arrêt de la roue motrice 14 et par conséquent de la bouteille.

La bouteille est ensuite relâchée par desserrage de l'étau de centrage de corps $EC_1$ et, comme indiqué sur la fig. 4, elle est transférée par le transporteur T dans un second étau de blocage $EC_2$ qui la maintient à disposition pour un conditionnement ultérieur.

Il est à noter que le cycle total de fonctionnement de l'appareil d'orientation radiale de nez de robinet est court, de l'ordre de 3 secondes, ce qui permet de maintenir une cadence de 1200 à 1300 bouteilles par heure.

Dans l'exemple considéré, on a adopté un système logique pneumatique pour commander la séquence de déroulement de différentes opérations et on a également utilisé des composants pneumatiques pour produire les différents mouvements. Cependant il va de soi que cette conception n'a aucun effet limitatif sur l'invention et il est possible d'envisager l'intervention de systèmes différents, notamment électromécaniques, hydrauliques, électroniques ou autres.

Bien entendu l'invention n'est pas limitée aux exemples de réalisation ci-dessus décrits et représentés, à partir desquels on pourra prévoir d'autres modes et d'autres formes de réalisation, sans pour cela sortir du cadre de l'invention.

25

REVENDICATIONS

1. Appareil automatique d'orientation radiale de bouteilles de gaz, ou d'autres objets cylindriques se déplaçant en translation dans un plan perpendiculaire à leur axe, caractérisé en ce qu'il comprend :

- un dispositif de centrage axial de bouteille (14, 17, 17', 18, 18' - 25, 26, 27, 28, 29) opérant d'une part sur des génératrices de la surface cylindrique du corps de bouteille (5), définissant l'axe $(Z_1-Z_1)$ dudit corps, et d'autre part sur des génératrices de la surface circonscrite au filetage extérieur (7) de collerette (6), définissant l'axe $(Z_2-Z_2)$ du robinet (R), pour centrer l'axe résultant (Z-Z) de la bouteille dans l'appareil, et

- un dispositif (36, 39, 40, 43, 44) pour amener ensuite le nez (8) de robinet dans l'orientation radiale requise en prenant comme référence ledit axe résultant centré (Z-Z) de ladite bouteille et en opérant sur une génératrice de la surface circonscrite au filetage extérieur (9) du nez de robinet, définissant l'axe (y-y) dudit nez.

2. Appareil selon la revendication 1, caractérisé en ce que ladite génératrice de la surface circonscrite au filetage extérieur (9) du nez de robinet est la génératrice située dans le plan diamétral horizontal dudit nez (8).

3. Appareil selon l'une des revendications 1 ou 2, caractérisé en ce que ledit dispositif de centrage axial de bouteille comprend :

- pour centrer l'axe $(Z_1-Z_1)$ du corps de bouteille en opérant sur ses génératrices et pour assurer son entraînement en rotation autour de cet axe, un mécanisme constitué par un étau (EC1), dont le plan médiateur (OYZ) est orienté perpendiculairement à la direction (X-X) d'avancement des bouteilles et qui comprend une première mâchoire portant une roue motrice horizontale (14) centrée dans ledit plan médiateur et une seconde mâchoire portant quatre galets fous (17, 17', 18, 18') sensiblement horizontaux et qui sont répartis de manière à être d'une part alignés verticalement deux par deux et d'autre part à être placés deux par deux dans deux plans horizontaux situés de part et d'autre et à égale distance du plan horizontal d'action de la roue motrice, les deux mâchoires étant ac-

26

tionnées par un vérin de manière à appliquer la roue motrice et les galets contre trois génératrices du corps de bouteille, et

- pour centrer l'axe$(Z_2-Z_2)$ du robinet en opérant sur la surface circonscrite au filetage extérieur (7) de la collerette (6), un mécanisme comprenant un flasque fixe (26) portant un galet (27) orienté horizontalement, monté fou et dont l'axe est situé, dans la position de centrage, dans ledit plan médiateur (OYZ) de l'étau de centrage du corps de bouteille, et un flasque mobile (25) pouvant pivoter autour d'un axe horizontal (35) et portant deux galets (28, 29) orientés perpendiculairement au flasque, montés fous et disposés symétriquement par rapport audit plan médiateur de façon que, lors du mouvement de rapprochement de ce flasque mobile, les deux galets précités viennent serrer la collerette (6) de bouteille contre le galet fixe (27) en assurant ainsi son centrage axial à l'aide de trois génératrices de ladite surface circonscrite (7).

4. Appareil selon l'une quelconque des revendications 1 à 3, caractérisé en ce qu'il est prévu un dispositif de support et guidage vertical (PA) sur lequel sont montés ledit mécanisme (25, 26, 27, 28, 29) de centrage de collerette de bouteille et ledit dispositif orienteur (36, 39, 40, 43, 44) de nez de robinet et qui est pourvu de moyens (30, 31, 34) pour régler en hauteur ledit dispositif de support en vue d'adapter le niveau du mécanisme de centrage de collerette au niveau de cette dernière (6).

5. Appareil selon la revendication 4, caractérisé en ce que ledit dispositif de support et guidage vertical a une structure de pantographe (PA).

6. Appareil selon la revendication 4 ou 5, caractérisé en ce que lesdits moyens de réglage de hauteur dudit dispositif de support et guidage vertical comprennent :
- deux bords biseautés (30, 31) formés sur lesdits flasques (25, 26) du mécanisme de centrage de collerette de bouteille de manière à entrer en contact avec le corps de la bouteille pénétrant dans l'appareil, et en outre
- une partie d'appui (34) en forme de bille qui est placée au centre du galet (27) solidaire du flasque fixe (26) de manière à poursuivre l'action de réglage de hauteur dudit dispositif de support jusqu'en un point zénithal (d) de la bouteille de gaz.

7. Appareil selon l'une quelconque des revendications 1 à 6, caractérisé en ce que le dispositif d'orientation radiale du nez de robinet comprend :

- un mécanisme de palpage de nez (39, 40, 43, 44), comportant un organe de palpage (P; 39) pouvant être amené par translation dans une position où il entre en contact avec une génératrice de ladite surface circonscrite au filetage extérieur (9) de nez et est ensuite déplacé par pivotement autour de l'axe (Z-Z) de la bouteille, en actionnant alors un moyen de commande (46) de freinage et d'arrêt de l'étau de centrage de corps de bouteille pour immobiliser le nez dans l'orientation radiale requise (O-Y), et

- un détecteur (D; 36) de présence de nez placé sur le trajet circulaire du nez et qui, lorsqu'il entre en contact avec celui-ci, déclenche le mécanisme de translation (43, 44) de l'organe de palpage (P; 39) pour l'amener dans la position où son pivot (42) est centré sur ledit axe résultant (Z-Z) de la bouteille.

8. Appareil selon la revendication 7, caractérisé en ce que ledit organe de palpage est constitué par une palette (39), de forme sensiblement rectangulaire et dont le côté long est orienté sensiblement horizontalement, ladite palette étant fixée sur un levier coudé (40, 41) pouvant pivoter autour d'un pivot (42) solidaire d'un chariot (43), lui-même déplaçable sur des glissières (44) sous l'impulsion d'un vérin ou autre organe semblable de façon à amener ledit pivot en coïncidence avec ledit axe résultant (Z-Z) de la bouteille.

9. Appareil selon l'une des revendications 7 ou 8, caractérisé en ce que l'angle de pivotement ($\alpha$) de l'organe de palpage autour de son pivot (42) jusqu'à immobilisation de la bouteille est réglé en tenant compte de l'inertie des éléments de commande, de transmission et du frein, ainsi que de la bouteille, pleine ou vide.

10. Appareil selon l'une quelconque des revendications 1 à 9, caractérisé en ce que ledit moyen de commande d'immobilisation de la bouteille dans l'orientation requise est constitué par une came (46) montée sur le pivot (42) du levier (40,41) supportant ledit organe de palpage (39) et sollicitant un organe de commande, notamment un distributeur pneumatique (48), du frein du groupe d'actionnement (16) de la roue motrice (14) dudit étau de centrage de corps de bouteille.

11. Appareil selon l'une quelconque des revendications 1 à 10, caractérisé en ce que, dans le mécanisme d'orientation radiale du nez de robinet, le détecteur (36) de présence de nez est placé, en considérant le sens de rotation de la bouteille autour de son axe résultant, en amont dudit organe de palpage (39) en étant espacé de celui-ci d'un intervalle angulaire au moins égal à 180°.

12. Appareil selon l'une quelconque des revendications 1 à 11, caractérisé en ce qu'il est prévu, en dessous et dans l'axe de l'étau de centrage (EC1) de corps de bouteille, un dispositif de soulèvement de bouteille comportant un mécanisme dont la ligne d'action est verticale et qui est muni à sa partie supérieure d'un ou plusieurs organes d'appui opérant par contact ponctuel ou linéaire contre le fond de la bouteille pour la soulever.

13. Appareil selon la revendication 12, caractérisé en ce que ledit mécanisme est un vérin et en ce que le ou les organes d'appui se présentent chacun sous la forme de boules librement tournantes placées à la partie supérieure de la tige de vérin.

14. Appareil selon l'une quelconque des revendications 1 à 13, caractérisé en ce qu'il est prévu, à la suite du poste orienteur, un étau de blocage $(EC_2)$, centré sur l'axe du transporteur (T) et assurant la retenue de la bouteille, dont le nez a été correctement orienté, en attente de son transfert.

0059135

1/5

FIG.1

FIG.3

FIG.2

FIG.4

FIG.5

FIG.6

FIG.7

FIG.8

## Office européen des brevets

## RAPPORT DE RECHERCHE EUROPEENNE

| Catégorie | Citation du document avec indication, en cas de besoin, des parties pertinentes | Revendica-tion concernée |
|---|---|---|
| D/A | BE - A - 687 264 (HEURTEY) | |
| D/A | FR - A - 2 147 351 (PRIMAGAZ) | |

**DOCUMENTS CONSIDERES COMME PERTINENTS**

**CLASSEMENT DE LA DEMANDE (Int. Cl. 3)**

B 65 G 47/24
F 17 C 5/00

**DOMAINES TECHNIQUES RECHERCHES (Int. Cl. 3)**

B 65 G
F 17 C
B 65 C

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07-05-1982 | OSTIJN |

OEB Form 1503.1 06.78